# EUROPÄISCHE PATENTSCHRIFT

(11) **EP 2 080 942 B1**
(45) Veröffentlichungstag und Bekanntmachung des Hinweises auf die Patenterteilung: **25.08.2010**
(21) Anmeldenummer: 08020780.6
(22) Anmeldetag: 29.11.2008
(51) Int. Cl.: F16K 11/07, F16K 31/08

(54) **Ventileinrichtung mit permanentmagnetischer Halteeinrichtung**
Valve device with permanent magnetic holding device
Dispositif de ventilation doté d'un dispositif de fixation à aimant permanent

(30) Priorität: 21.01.2008 CN 200810004612
(43) Veröffentlichungstag der Anmeldung: 22.07.2009
(73) Patentinhaber: FESTO AG & Co. KG, 73734 Esslingen (DE)
(72) Erfinder: Lieb, Jürgen, 72584 Hülben (DE); Gassmann, Andreas, 71384 Weinstadt (DE); Zhang, Yide, Pudong, 201206, Shangai (CN)
(74) Vertreter: Abel, Martin

(56) Entgegenhaltungen:
- EP-A- 0 381 835
- EP-A- 1 760 376
- DE-A1- 2 729 482

## Beschreibung

Die Erfindung betrifft eine Ventileinrichtung, mit einem in einer Aufnahmekammer eines ventilgehäuses axial bewegbar angeordneten Ventilschieber, der durch Fluidbeaufschlagung zwischen zwei durch Anschlagmittel vorgegebenen Endstellungen umschaltbar ist und in mindestens einer dieser Endstellungen durch eine Halteeinrichtung mittels von mindestens einem Permanentmagnet erzeugten Magnetkräften lösbar festgehalten wird, wobei die Halteeinrichtung einander axial zugewandte erste und zweite axiale Halteflächen aufweist, von denen die erste axiale Haltefläche an einem Endabschnitt der Aufnahmekammer ortsfest am Ventilgehäuse und die gegenüberliegende zweite axiale Haltefläche am Ventilschieber angeordnet ist, so dass sich zwischen den beiden axialen Halteflächen erste axiale Magnetkräfte ausbilden können, die den Ventilschieber in der Endstellung festhalten.

Eine aus der EP 1 760 376 A1 bekannte Ventileinrichtung dieser Art ist als vorgesteuertes Impulsventil ausgebildet. Impulsventile sind Mehrwegeventile, deren Ventilschieber zum Umschalten zwischen zwei Endstellungen impulsartig mittels eines fluidischen Steuerdruckes beaufschlagt werden, wobei der Ventilschieber die Endstellung auch nach der Wegnahme des Steuerdruckes beibehält. Damit der Ventilschieber auch bei Erschütterungen in der Endstellung verharrt, ist den beiden Endabschnitten der Aufnahmekammer jeweils eine Halteeinrichtung zugeordnet. Die Halteeinrichtung enthält einen Permanentmagnet und bewirkt ein lösbares Festhalten des Ventilschiebers mittels axialen Magnetkräften. Die axialen Magnetkräfte bilden sich zwischen einer am Ventilgehäuse angeordneten ersten axialen Haltefläche und einer dieser gegenüberliegenden, am Ventilschieber angeordneten zweiten axialen Haltefläche aus. Die erste axiale Haltefläche befindet sich an einem am Ventilgehäuse angeordneten Permanentmagnet.

Bei der bekannten Ventileinrichtung sind zwischen den beiden axialen Halteflächen Anschlagmittel vorgesehen, die die Endstellung des Ventilschiebers derart vorgeben, dass ein unmittelbarer Kontakt zwischen den beiden axialen Halteflächen verhindert ist. Ein solcher unmittelbarer Kontakt hätte beim Erreichen der Endstellung hohe mechanische Belastungen zur Folge. Außerdem entstehen bei einem unmittelbaren Kontakt sehr hohe axiale Magnetkräfte, die sich durch den zum Umschalten des Ventilschiebers aufgebrachten Steuerdruck nur schwer überwinden lassen.

Ein Problem bei der bekannten Ventileinrichtung sind die bei der Herstellung und Montage auftretenden Toleranzen. Diese können dazu führen, dass der axiale Abstand, den die axialen Halteflächen in der Endstellung des Ventilschiebers aufweisen, unterschiedlich groß ausfällt. Dieser Effekt wäre noch ausgeprägter, wenn sich die Anschlagmittel nicht unmittelbar zwischen den beiden axialen Halteflächen befänden. Die Folge eines variierenden axialen Abstandes zwischen den axialen Halteflächen sind unterschiedlich hohe axiale Magnetkräfte, die in der Endstellung wirksam sind. Somit kann es geschehen, dass bei mehreren Ventileinrichtungen gleicher Bauart unterschiedlich hohe Fluidkräfte benötigt werden, um den Ventilschieber aus der einen Endstellung in die andere Endstellung umzuschalten. Als Folge hiervon können unterschiedlich lange Umschaltzeiten auftreten, was die gegenseitige Abstimmung mehrerer gemeinsam verwendeter Ventileinrichtungen erschwert. Aus Sicherheitsgründen muss außerdem jede ventileinrichtung mit demjenigen maximalen Steuerdruck betrieben werden, der die axialen Magnetkräfte auch dann noch mit Sicherheit überwinden kann, wenn der ungünstigste Toleranzfall vorliegt. Dies führt dazu, dass ein Ventilschieber, der mit nur geringen axialen Magnetkräften gehalten wird, eine hohe Beschleunigung erfährt, so dass beim Aufprall in der anderen Endlage hohe Belastungen auftreten.

Es ist eine Aufgabe der vorliegenden Erfindung, eine Ventileinrichtung zu schaffen, bei der der Ventilschieber in seiner Endlage trotz den auftretenden Fertigungstoleranzen mit einer gleichmäßigen axialen Magnetkraft festgehalten wird.

Diese Aufgabe wird dadurch gelöst, dass die Halteeinrichtung, zusätzlich zu der ersten und zweiten axialen Haltefläche, sich in der Endstellung des Ventilschiebers radial bezüglich der Längsachse der Aufnahmekammer gegenüberliegende erste und zweite radiale Halteflächen aufweist, von denen die erste radiale Haltefläche ortsfest am Ventilgehäuse und die zweite radiale Haltefläche am Ventilschieber angeordnet ist, derart, dass sich zwischen den beiden radialen Halteflächen den ersten axialen Magnetkräften entgegengesetzte zweite axiale Magnetkräfte ausbilden, wenn die zweite radiale Haltefläche axial über die erste radiale Haltefläche vorsteht.

In der Endlage des Ventilschiebers liegen sich somit die erste und zweite axiale Haltefläche in axialer Richtung gegenüber, während sich gleichzeitig die radialen Halteflächen in radialer Richtung gegenüberliegen. Hierbei wirken sich die sich zwischen den radialen Halteflächen ausbildenden radialen Magnetkräfte nicht auf die zum Umschalten des Ventilschiebers benötigten Fluidkräfte aus. Relevant für diese Fluidkräfte sind lediglich nicht radiale Magnetkräfte, die sich zwischen den radialen Halteflächen ausbilden, wenn diese eine axial zueinander versetzte Relativposition einnehmen. Hier entstehen schräg verlaufende magnetische Feldlinien, die auch axiale Magnetkräfte hervorrufen. Für die Erfindung ist hierbei relevant, dass zwischen den radialen Halteflächen zweite axiale Magnetkräfte entstehen, die entgegengesetzt zu den ersten axialen Magnetkräften orientiert sind, wenn die zweite radiale Haltefläche in der Endlage des Ventilschiebers axial über die erste radiale Haltefläche hinausragt. Da derjenige Anteil der zweiten radialen Haltefläche, der über die erste radiale Haltefläche vorsteht, umso größer ist, je weiter sich die beiden axialen Halteflächen aneinander annähern, steigt entsprechend auch die zweite axiale Magnetkraft an und wirkt zunehmend stärker entgegen der sich ebenfalls vergrößernden ersten axialen Magnetkraft. Auf diese Weise kann in der Endstellung des Ventilschiebers eine von Fertigungstoleranzen unabhängige, relativ gleichmäßige magnetische Haltekraft gewährleistet werden.

Aufgrund dieser Unempfindlichkeit gegenüber Schwankungen in der Breite des axialen Zwischenraumes, der in der Endstellung zwischen der ersten und zweiten axialen Haltefläche vorliegt, eignet sich die Erfindung auch für solche Ventileinrichtungen, bei denen die Anschlagmittel nicht zwischen den axialen Halteflächen angeordnet sind, sondern außerhalb dieses Bereiches. Die ventileinrichtung kann insbesondere als sogenanntes Sitzventil ausgebildet sein, bei dem der Ventilschieber mindestens einen Verschlusskörper aufweist, der mit einem axial orientierten Ventilsitz kooperiert, wobei diese Komponenten die Anschlagmittel bilden. Bei solchen Sitzventilen ist die Endstellung des Ventilschiebers in besonderem Maße toleranzabhängig, weil der Verschlusskörper in der Regel in dem mit dem Ventilsitz kooperierendem Bereich aus einem elastischen Material besteht, das in einem gewissen Maße nachgiebig ist.

Vorteilhafte Weiterbildungen der Erfindung gehen aus den Unteransprüchen hervor.

Die Ventileinrichtung kann mit nur einer Halteeinrichtung ausgestattet sein, um den Ventilschieber in nur einer Endstellung mittels Magnetkraft zu fixieren. Besonders zweckmäßig ist jedoch eine Ausgestaltung, bei der zwei Halteinrichtungen vorhanden sind, so dass beide Endstellungen durch permanentmagnetische Kräfte fixierbar sind. Es liegt dann eine bistabile Ventileinrichtung vor.

Die Anschlagmittel sollten unabhängig davon, wo sie sich befinden, so ausgebildet sein, dass in der Endstellung des Ventilschiebers ein axialer Luftspalt zwischen den einander zugewandten axialen Halteflächen vorliegt.

Obgleich auch prinzipiell eine umgekehrte Anordnung möglich wäre, empfehlt sich in besonderer Weise eine Anordnung, bei der die radialen Halteflächen so ausgerichtet sind, dass die erste radiale Haltefläche nach radial innen und die zweite radiale Haltefläche nach radial außen weist.

Vorzugsweise sind die radialen Halteflächen ringförmig ausgebildet, so dass sie sich in der Endstellung mit radialem Abstand koaxial umschließen. Es handelt sich insbesondere um kreiszylindrische Flächen.

Prinzipiell könnten die Halteflächen allerdings auch in jeweils mehrere Flächenabschnitte unterteilt sein, die um die Längsachse der Aufnahmekammer herum verteilt sind. Eine symmetrische Verteilung ist hier von Vorteil, damit die entstehenden radialen Magnetkräfte keine resultierenden Querkräfte auf den Ventilschieber ausüben.

Die vom Ventilschieber axial wegweisende rückseitige Abschlusskante der ersten radialen Haltefläche ist zweckmäßigerweise so platziert, dass sie mit Abstand vor einer Ebene liegt, die die am Ventilgehäuse angeordnete erste axiale Haltefläche beinhaltet.

Vorzugsweise befindet sich die zweite axiale Haltefläche an einer Stirnfläche des Ventilschiebers. Sie kann insbesondere an einem Haltekörper ausgebildet sein, der aus einem permanentmagnetischen oder aus einem ferromagnetischem Material besteht. Der Haltekörper kann gleichzeitig dazu dienen, einen zur Fluidbeaufschlagung des Ventilschiebers vorhandenen Antriebskolben an einem Grundkörper des Ventilschiebers zu befestigen.

Eine besonders vorteilhafte konstruktive Gestaltung sieht vor, dass die erste radiale Haltefläche von einem Tragvorsprung getragen ist, der in einem radial außerhalb der ersten axialen Haltefläche liegenden Bereich vor eine Ebene ragt, die rechtwinkelig zur Längsachse der Aufnahmekammer verläuft und die erste axiale Haltefläche enthält.

Besonders zweckmäßig ist es, wenn der Tragvorsprung, im Querschnitt gesehen, zur ersten radialen Haltefläche hin nach radial innen abgebogen oder abgewinkelt ist.

Insbesondere dann, wenn die erste radiale Haltefläche eine Ringfläche ist, ist auch der Tragvorsprung bevorzugt ringförmig ausgebildet.

Der für die Erzeugung der permanentmagnetischen Magnetkräfte verantwortliche mindestens eine Permanentmagnet ist vorzugsweise am Ventilgehäuse angeordnet. Er ist zweckmäßigerweise von einem ferromagnetischen Jochkörper umschlossen, der den Tragvorsprung aufweist. Bevorzugt ist der Jochkörper topfförmig ausgebildet, wobei er den Permanentmagnet in sich aufnimmt.

Besonders vorteilhaft ist auch eine konstruktive Lösung, bei der der Jochkörper am rückwärtigen Endabschnitt des Permanentmagneten anliegt. Der rückwärtige Endabschnitt des Permanentmagneten ist derjenige Endabschnitt, der vom Ventilschieber wegweist. Am vorderen Endabschnitt des Permanentmagneten ragt der Jochkörper jedoch mit radialem Abstand außen vorbei, so dass in diesem Bereich ein radialer Luftspalt zwischen dem Jochkörper und dem Permanentmagneten vorliegt. Im Anschluss an diesem Luftspalt ist der Jochkörper nach radial innen abgebogen oder abgewinkelt und trägt an seinem Ende die erste radiale Haltefläche.

Nachfolgend wird die Erfindung anhand der beiliegenden Zeichnung näher erläutert. In dieser zeigen:
- Figur 1: eine bevorzugte Ausführungsform der erfindungsgemä- ßen Ventileinrichtung in einem Längsschnitt, wobei der Ventilschieber in einer ersten Endstellung ge- zeigt ist, bei der er nach rechts bewegt ist,
- Figur 2: den in Figur 1 strichpunktiert umrahmten Ausschnitt II im Bereich des linken Endabschnittes der Aufnah- mekammer, wobei die beiden axialen Halteflächen ei- nen maximalen axialen Abstand zueinander aufweisen,
- Figur 3: den in Figur 1 strichpunktiert umrahmten Ausschnitt II bei einem Zwischenzustand des Ventilschiebers während des Umschaltens in die zweite Endstellung, wobei die axialen Halteflächen weiter als in Figur 2 einander angenähert sind,
- Figur 4: den in Figur 3 strichpunktiert umrahmten Ausschnitt IV in einer vergrößerten Darstellung,
- Figur 5: den in Figur 4 strichpunktiert umrahmten Ausschnitt in einem weiteren Zwischenzustand des Ventilschie- bers, in dem die beiden axialen Halteflächen noch weiter einander angenähert sind und die zweite ra- diale Haltefläche sich ein Stück weit axial mit der ersten radialen Haltefläche überlappt,
- Figur 6: den in Figur 1 strichpunktiert umrahmten Ausschnitt II, wobei ein weiterer Zwischenzustand ersichtlich ist, bei dem die beiden axialen Halteflächen weiter als in Figur 4 einander angenähert sind, die zweite radiale Haltefläche jedoch noch nicht axial über die erste radiale Haltefläche vorsteht,
- Figur 7: den in Figur 6 strichpunktiert umrahmten Ausschnitt VII in einer vergrößerten Darstellung, und
- Figur 8: den in Figur 6 strichpunktiert umrahmten Ausschnitt VII bei Einnahme der zweiten Endstellung des Ven- tilschiebers, wobei die zweite radiale Haltefläche ein Stück weit axial über die erste radiale Halte- fläche hinausragt, so dass sich eine zweite axiale Magnetkraft aufgebaut hat.

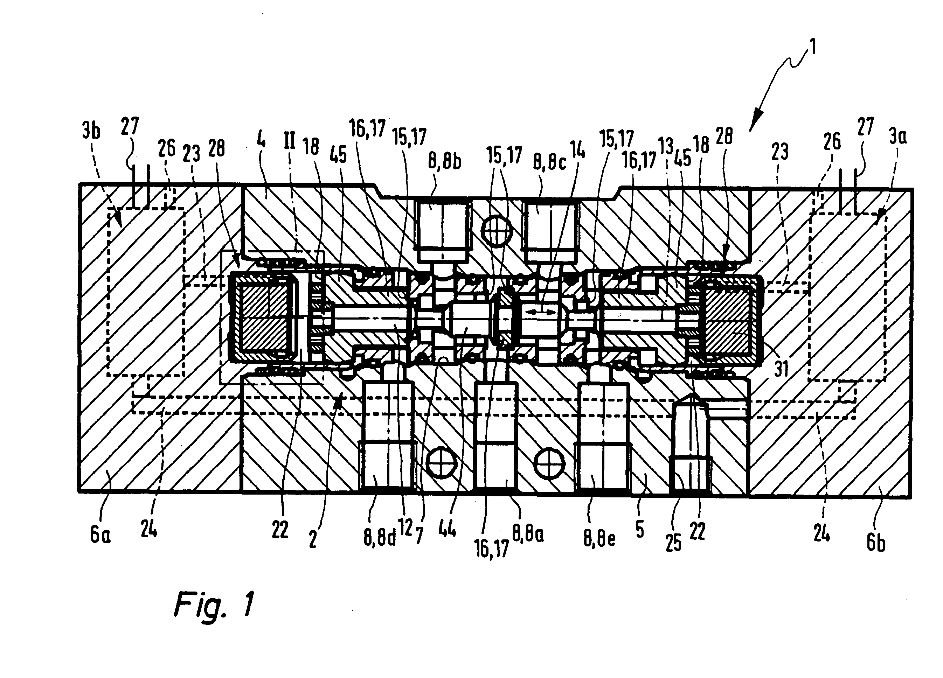

Die Figur 1 zeigt in einem Längsschnitt die Gesamtheit einer erfindungsgemäßen Ventileinrichtung 1, die als bistabiles Ventil oder als Impulsventil bezeichnet werden kann.

Die Ventileinrichtung 1 enthält ein durch Fluidkraft betätigbares Hauptventil 2 und zwei dessen Fluidbeaufschlagung steuernde Vorsteuerventile 3a, 3b, die elektrisch betätigbar sind.

Die Ventileinrichtung 1 verfügt über ein ventilgehäuse 4, das beim Ausführungsbeispiel aus einem Mittelteil 5 und zwei an entgegengesetzten Stirnseiten daran angesetzten Außenteilen 6a, 6b besteht. Die Außenteile 6a, 6b enthalten jeweils eines der nur gestrichelt angedeuteten Vorsteuerventile 3a, 3b.

Im Inneren des Ventilgehäuses 4 erstreckt sich eine längliche Aufnahmekammer 7. Sie durchzieht zweckmäßigerweise das Mittelteil 5 und ist an beiden Stirnseiten durch die Außenteile 6a, 6b verschlossen.

In die Aufnahmekammer 7 münden seitlich, an axial zueinander beabstandeten Stellen, mehrere das Ventilgehäuse 4 durchsetzende Ventilkanäle 8 ein. Im Inneren der Aufnahmekammer 7 befindet sich ein zu der Aufnahmekammer 7 koaxialer, länglicher Ventilschieber 12, der in der Achsrichtung der Längsachse 13 der Aufnahmekammer 7 bewegbar ist. Auf diese Weise kann der Ventilschieber 12 zwischen einer in Figur 1 gezeigten ersten Endstellung und einer entgegengesetzten zweiten Endstellung umgeschaltet werden. Die Umschaltbewegung 14 ist durch einen Doppelpfeil angedeutet.

In den beiden Endstellungen werden die Ventilkanäle 8 in an sich bekannter Weise in unterschiedlichem Muster miteinander verbunden. Beim Ausführungsbeispiel wird ein an eine Druckquelle angeschlossener Speisekanal 8a abwechselnd mit jeweils einem von zwei zu einem Verbraucher führenden Arbeitskanälen 8b, 8c verbunden. Gleichzeitig steht der jeweils nicht mit dem Speisekanal 8a verbundene Arbeitskanal 8b, 8c mit einem von zwei zur Atmosphäre führenden Abführkanälen 8d, 8e in Verbindung.

Die Ventileinrichtung 1 des Ausführungsbeispiels ist vom Typ eines Sitzventils. Zwischen denjenigen Abschnitten der Aufnahmekammer 7, in die die Ventilkanäle 8 einmünden, sind ringförmige Ventilsitze 15 am Ventilgehäuse 4 angeordnet. Sie sind axial orientiert und umschließen den Ventilschieber 12 koaxial mit radialem Abstand. Somit verbleibt zwischen jedem Ventilsitz 15 und dem Ventilschieber 12 ein Ringspalt, der ein Hindurchströmen von Fluid ermöglicht.

Jedem Ventilsitz 15 liegt ein am Ventilschieber 12 angeordneter Verschlusskörper 16 axial gegenüber. Je nach Endstellung können die Verschlusskörper 16 am benachbarten Ventilsitz 15 anliegen oder von dem Ventilsitz 15 abgehoben sein, um einen Fluiddurchtritt durch den oben erwähnten Ringspalt zu verhindern oder zu ermöglichen.

Die miteinander koorperierenden Ventilsitze 15 und Verschlusskörper 16 bilden gleichzeitig Anschlagmittel 17, die die beiden Entstellungen des Ventilschiebers 12 definieren, das heißt die in den beiden Endstellungen zwischen dem Ventilschieber 12 und dem Ventilgehäuse 4 eingenommene axiale Relativposition.

Die Umschaltbewegung 14 des Ventilschiebers 12 wird dadurch hervorgerufen, dass an den beiden Stirnseiten des Ventilschiebers 12 angeordnete Antriebsflächen 18 mit einem Steuerfluid beaufschlagt werden, das durch die beiden Vorsteuerventile 3a, 3b gesteuert zugeführt werden kann. Jede Antriebsfläche 18 begrenzt einen vom zugeordneten Endabschnitt der Aufnahmekammer 7 definierten Antriebsraum 22, in den ein mit einem der Vorsteuerventile 3a, 3b verbundener Vorsteuerkanal 23 einmündet. Jedes Vorsteuerventil 3a, 3b ist außerdem über einen Vorsteuer-Speisekanal 24 mit einem Vorsteuer-Speiseanschluss 25 des Ventilgehäuses 4 verbunden, über den das Steuerfluid eingespeist wird. Außerdem weist jedes Vorsteuerventil 3a, 3b eine mit der Admosphäre verbundene Abführöffnung 26 auf.

Das Steuerfluid kann alternativ auch vom Speisekanal 8a abgegriffen werden, wenn die Vorsteuer-Speisekanäle 24 mit diesem Speisekanal 18a verbunden sind.

Durch elektrische Betätigungssignale, die den Vorsteuerventilen 3a, 3b über elektrische Schnittstellenmittel 27 von einer nicht gezeigten elektronischen Steuereinrichtung zugeführt werden, können die Vorsteuerventile 3a, 3b derart betätigt werden, dass sich im zugeordneten Antriebsraum 22 entweder ein das Umschalten in die andere Endstellung bewirkender Steuerdruck aufbaut oder der Antriebsraum 22 drucklos ist.

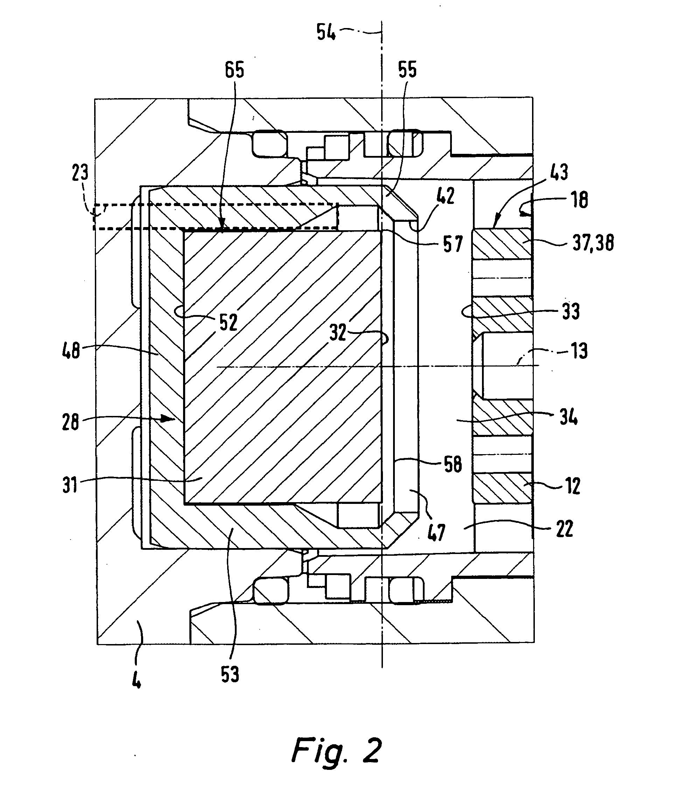

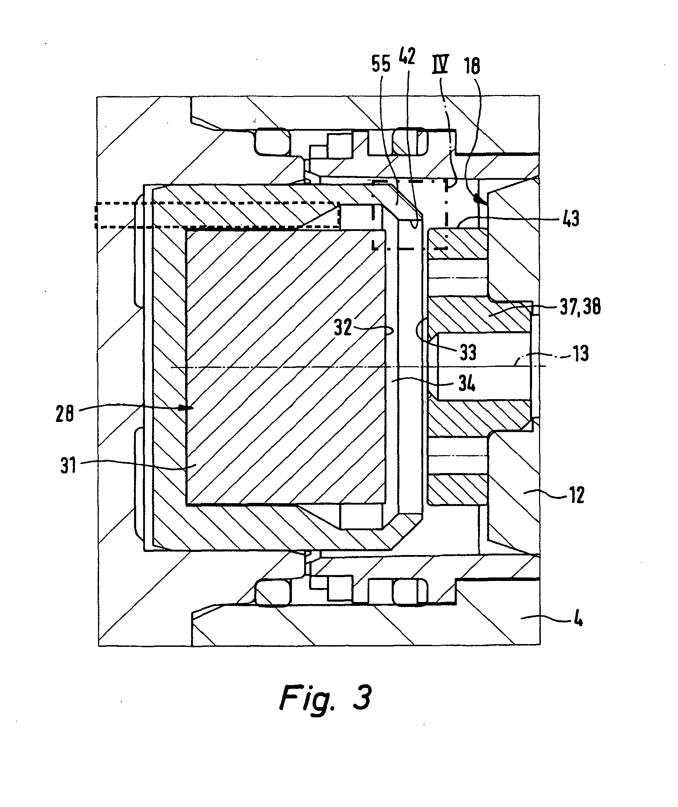

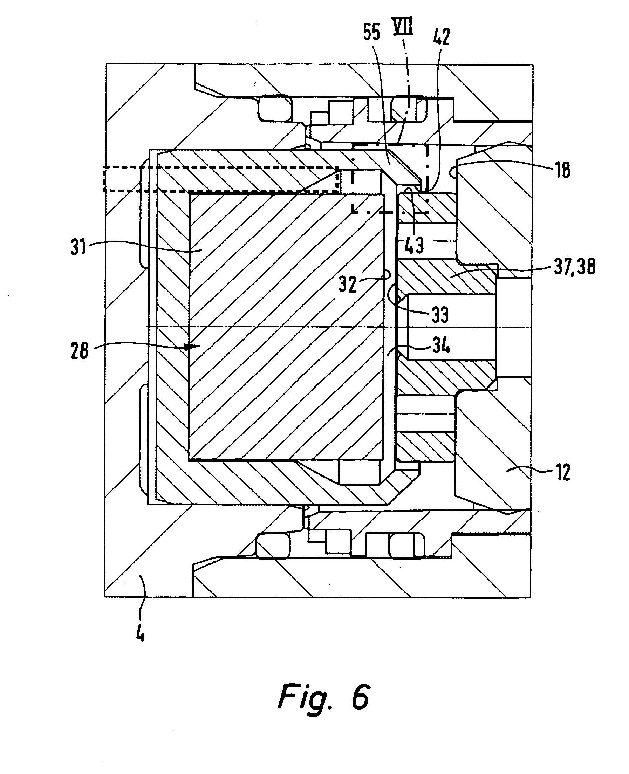

Damit der Ventilschieber 12 in seinen beiden Endstellungen auch dann sicher gehalten wird, wenn beide Antriebsräume 22 drucklos sind, ist jedem Endabschnitt der Aufnahmekammer 7 eine den Ventilschieber 12 in der zugeordneten Endstellung mittels Magnetkraft lösbar festhaltende Halteeinrichtung 28 zugeordnet. Da die beiden Halteeinrichtungen 28 identisch ausgebildet sind, beschränkt sich die weitere Beschreibung auf die in Figur 1 links abgebildete Halteeinrichtung 28, die dazu dient, den Ventilschieber 12 in der zweiten Endstellung zu fixieren. Die Figuren 2 bis 8 beziehen sich jeweils auf diese vorgenannte linke Halteeinrichtung 28.

Die genannten Magnetkräfte werden von mindestens einem Permanentmagnet 31 erzeugt und sind somit unabhängig von elektrischer Energie. Allerdings sind die durch das Feuerfluid ausübbaren Fluidkräfte größer als die magnetischen Haltekräfte, so das letztere Überwunden werden können, um den Ventilschieber 12 umzuschalten.

Im Folgenden wird eine bevorzugte Bauform der Halteeinrichtung 28 näher erläutert.

Die Halteeinrichtung 28 enthält erste und zweite axiale Halteflächen 32, 33, die einander in der Achsrichtung der Längsachse 13, also axial, gegenüberliegen, wobei sie einander zugewandt sind. Die erste axiale Haltefläche 32 ist im Bereich des Endabschnittes der Aufnahmekammer 7 ortsfest am Ventilgehäuse 4 angeordnet. Die zweite axiale Haltefläche 33 befindet sich an der gegenüberliegenden Stirnfläche des Ventilschiebers 12. In Abhängigkeit von der Relativposition zwischen dem Ventilschieber 12 und dem Ventilgehäuse 4 ergibt sich eine unterschiedliche Breite des zwischen den beiden axialen Halteflächen 32, 33 definierten axialen Zwischenraumes 34. Unter "Breite" sind hier die Abmessungen in der Achsrichtung der Längsachse 13 zu verstehen.

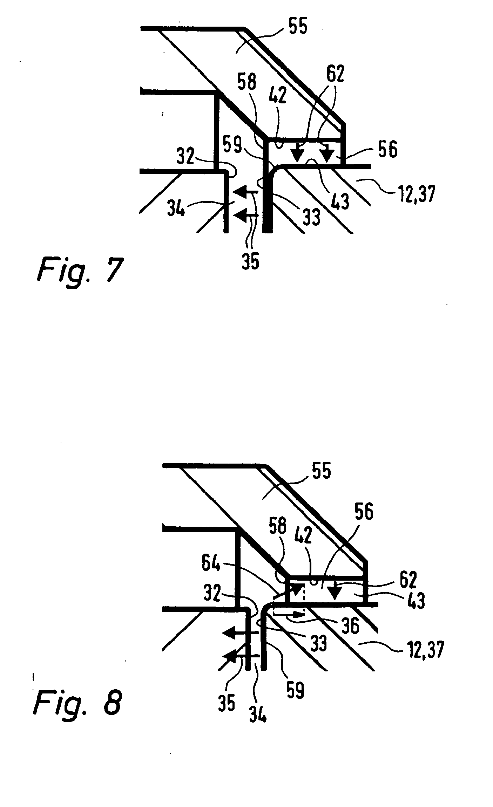

Nimmt der Ventilschieber 12 die aus Figur 1 ersichtliche erste Endstellung ein, beträgt die Breite des axialen Zwischenraumes 34 der für das Festhalten der zweiten Endstellung verantwortlichen Halteeinrichtung 28 ein Maximum. Diese ist aus Figur 2 ersichtlich. Die minimale Breite des axialen Zwischenraumes 34 liegt vor, wenn der Ventilschieber 12 die durch diese Halteeinrichtung 28 fixierbare zweite Endstellung einnimmt (Figur 8).

Zwischen den beiden axialen Halteflächen 32, 33 können sich erste axiale Magnetkräfte 35 ausbilden, die den Ventilschieber 12 in die Endstellung vorspannen und in der Endstellung festhalten. Diese ersten axialen Magnetkräfte 35 sind umso größer, je geringer die Breite des axialen Zwischenraumes 34 ist. Im Zustand der maximalen Breite des axialen Zwischenraumes 34 gemäß Figur 2 betragen die ersten axialen Magnetkräfte 35 ein Minimum oder sind eventuell, aufgrund des großen Abstandes der axialen Halteflächen 32, 33, überhaupt nicht vorhanden.

Sofern nichts anderes ausgesagt wird, ist in der vorliegenden Beschreibung unter der "axialen" Richtung die Achsrichtung der Längsachse 13 zu verstehen und unter der "radialen Richtung" die Richtung quer zu dieser Längsachse 13.

Die zweite axiale Haltefläche 33 ist beim Ausführungsbeispiel an einem stirnseitig am Ventilschieber 12 angeordneten Haltekörper 37 ausgebildet. Der Haltekörper 37 ist insbesondere plattenförmig oder scheibenförmig gestaltet. Er besteht aus einem ferromagnetischem Material, kann aber prinzipiell auch aus einem permanentmagnetischen Material bestehen.

Der Haltekörper 37 ist koaxial zur Längsachse 13 angeordnet, wobei seine Außenumfangsfläche eine zweite radiale Haltefläche 43 der Halteeinrichtung 28 bildet. Diese ist insbesondere kreiszylindrisch geformt.

Der Ventilschieber 12 enthält zweckmäßigerweise einen stabförmigen oder stangenförmigen Grundkörper 44, der die Verschlusskörper 16 trägt. An beiden Stirnseiten ist auf den Grundkörper 44 jeweils ein Antriebskolben 45 aufgesteckt, der die Antriebsfläche 18 definiert. Mittels eines Befestigungselementes 38, das dem Antriebskolben 45 axial außen vorgelagert ist und das mit dem Grundkörper 44 verschraubt ist, ist der Antriebskolben 45 an dem Grundkörper 44 befestigt. Ein Vorteil ist damit verbunden, dass das Befestigungselement 38 unmittelbar den Haltekörper 37 bildet. Dadurch kann auf die Verwendung separater Elemente verzichtet werden.

Die zweite axiale Haltefläche 33 befindet sich zweckmäßigerweise an der dem Ventilschieber 12 axial zugewandten Stirnfläche des schon erwähnten Permanentmagneten 31. Der Permanentmagnet 31 ist bevorzugt kreiszylindrisch ausgebildet und besitzt eine axiale Polarisierung. Er ist in einem topfförmigen Jochkörper 46 aufgenommen, der aus einem ferromagnetischen Material besteht.

Der Jochkörper 46 ist am Ventilgehäuse 4 befestigt. Er ist so ausgerichtet, dass seine Öffnung 37 dem Ventilschieber 12 zugewandt ist und seine Bodenwand 48 an der der ersten axialen Haltefläche 32 entgegengesetzen rückseitigen Stirnfläche 52 des Permanentmagneten 31 anliegt. Zweckmäßigerweise ist der Permanentmagnet 31 mit dem Jochkörper 46 verklebt. Der Jochkörper 46 ist mit dem Ventilgehäuse 4 zweckmäßigerweise ebenfalls verklebt, kann aber auch durch andere Befestigungsmaßnahmen fixiert sein.

An seiner radialen Außenseite ist der Permanentmagnet von der ihn umschließenden Seitenwand 53 des Jochkörpers 46 flankiert. Die Seitenwand 53 ragt axial in Richtung zum Ventilschieber 12, wobei sie über eine zu der Längsachse 13 rechtwinklige Ebene 54, die die erste Haltefläche 32 beinhaltet, zum Ventilschieber 12 hin vorsteht. Die vorgenannte Ebene 54 wird im Folgenden zur besseren Unterscheidung als "Bezugsebene 54" bezeichnet.

Der axial über die Bezugsebene 54 hinausragende Endabschnitt der Seitenwand 53 bildet einen zur Längsachse 13 konzentrischen, ringförmigen Tragvorsprung 55, die eine erste radiale Haltefläche 42 der Halteeinrichtung 28 trägt. Während die oben erwähnte zweite radiale Haltefläche 43 nach radial außen weist, ist die erste radiale Haltefläche 42 nach radial innen orientiert.

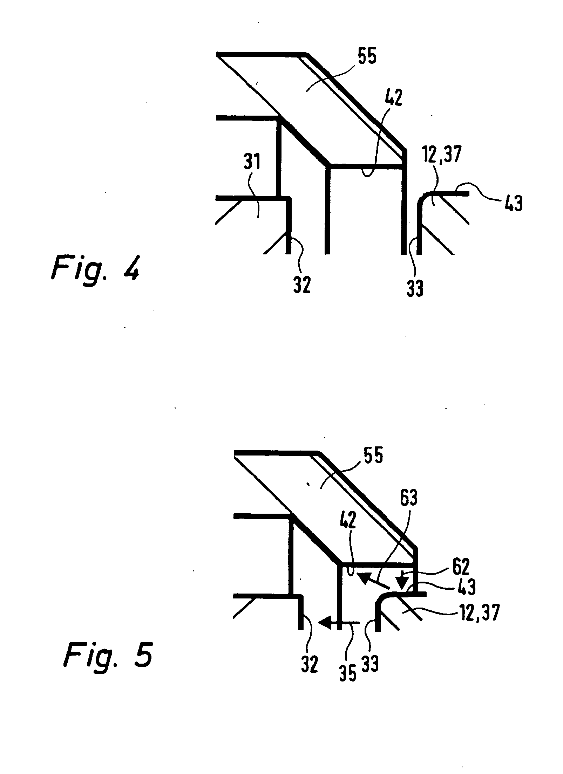

Die radiale Abstand von der Längsachse 13 zur zweiten radialen Haltefläche 43 ist geringer als zur ersten radialen Haltefläche 42. Auf diese Weise ist es möglich, dass die zweite radiale Haltefläche 43 in den von der ersten radialen Haltefläche 42 umgrenzten Bereich eintaucht, wenn sich der Ventilschieber 12 an die zweite Endstellung annähert. Dies ist aus Figur 5 gut zu erkennen. In der zweiten Endstellung gemäß Figur 8 liegen sich die beiden radialen Halteflächen 42, 43 mit Bezug zu der Längsachse 13 radial gegenüber und begrenzen gemeinsam einen ringförmigen Luftspalt 56.

Die erste radiale Haltefläche 42 ist bevorzugt kreiszylindrisch ausgebildet. Ihr Radialabstand zur Längsachse 13 ist größer als der Radialabstand zwischen dieser Längsachse 13 und der radial außen liegenden Abschlusskante 57 der ersten axialen Haltefläche 32. Die beiden axialen Halteflächen 32, 33 verfügen zweckmäßigerweise über den gleichen Umriss, so dass der Abstand der zweiten radialen Haltefläche 43 von der Längsachse 13 dem Radialabstand zwischen der Abschlusskante 57 und der Längsachse 13 entspricht.

Die erste radiale Haltefläche 42 ist so ausgebildet und angeordnet, dass ihre dem Ventilschieber axial abgewandte rückseitige Abschlusskante 58 der Bezugsebene 54 zum Ventilschieber 12 hin mit Abstand vorgelagert ist. Dies bedeutet, dass zwischen den beiden axialen Halteflächen 32, 33 auch dann noch ein axialer Zwischenraum 34 verbleibt, wenn sich die zweite radiale Haltefläche 43 soweit in axialer Richtung mit der ersten radialen Haltefläche 42 überlappt, dass ihre vordere Abschlusskante 59 mit der rückseitigen Abschlusskante 58 der ersten radialen Haltefläche 42 auf gleicher axialer Höhe liegt. Dieser Zustand ist aus Figur 7 ersichtlich.

Der axiale Zwischenraum 34 ist zweckmäßigerweise ein Leerraum und kann folglich als Luftspalt bezeichnet werden. Dies ist möglich, weil die oben erwähnten Anschlagmittel 17 außerhalb dieses axialen Zwischenraumes 34 angeordnet sind.

Gleichwohl sind die Anschlagmittel 17 so ausgebildet, dass sich die beiden axialen Halteflächen 32, 33 in der Endstellung des Ventilschiebers 12 nicht berühren, sondern ein Luftspalt verbleibt. Dies ist wichtig, weil ein unmittelbarer Kontakt zwischen den beiden axialen Halteflächen 32, 33 sehr hohe Magnetkräfte zur Folge hätte, die das Umschalten des Ventilschiebers 12 behindern oder verhindern würden.

Aufgrund von Fertigungs- und Montagetoleranzen kann allerdings nicht gewährleistet werden, dass der in der Endstellung zwischen den beiden axialen Halteflächen 32, 33 vorhandene Zwischenraum 34 stets die gleiche, in axialer Richtung gemessene Breite hat. Mit anderen Worten kann der Abstand zwischen den beiden axialen Halteflächen 32, 33 toleranzbedingt variieren. Die besondere Ausgestaltung der Halteinrichtungen 28 gewährleistet nun, dass unabhängig von Schwankungen in der Breite des Zwischenraumes 34 die den Ventilschieber 12 in der Endlage festhaltenden axialen Magnetkräfte verhältnismäßig gleichmäßig sind und auch dann nicht übermäßig ansteigen, wenn die Breite des Zwischenraumen 34 relativ klein wird.

Die Funkionalität lässt sich am Besten anhand der Figuren 4, 5, 7 und 8 erläutern. Hier sind Zustände gezeigt, die auftreten, wenn sich der Ventilschieber 12 aus der ersten Endstellung in die zweite Endstellung bewegt.

Im Zustand der Figur 4 liegt noch keine axiale Überlappung zwischen den beiden radialen Halteflächen 42, 43 vor. Es tritt auch keine relevante magnetische Anziehungskraft zwischen den beiden axialen Halteflächen 32, 33 auf, so dass die auf den Ventilschieber 12 einwirkende Betätigungskraft überwiegend aus der Fluidkraft des in den in Figur 1 rechts liegenden Antriebsraum 22 eingespeisten Steuerfluides resultiert.

In Figur 5 ist der Haltekörper 37 ein Stück weit in die Öffnung 46 eingetaucht. Daraus resultiert eine gewisse axiale Überlappung zwischen den beiden radialen Halteflächen 42, 43. Zwischen den radialen Halteflächen 42, 43 bilden sich somit im Überlappungsbereich radiale Magnetkräfte 62 aus, die für die Umschaltbewegung 14 irrelevant sind, weil sie nicht in deren Richtung wirken.

Zusätzlich stellen sich aber schräg in Richtung der Endlage wirksame Magnetkräfte 63 ein, die eine axiale Kraftkomponente aufweisen, welche mit der Kraftrichtung der allmählich stärker werdenden ersten axialen Magnetkräfte 35 zusammenfällt.

Im Zustand der Figur 7 wirken zwischen den beiden radialen Halteflächen 42, 43 im wesentlichen nur radiale Magnetkräfte 62. Die den Ventilschieber 12 in die Endstellung ziehenden Magnetkräfte bestehen hier im wesentlichen nur aus den zwischen den beiden axialen Halteflächen 32, 33 wirkenden ersten axialen Magnetkräften 35.

Wenn sich nun aber der Ventilschiber 13 noch weiter an die erste axiale Haltefläche 32 annähert, verlagert sich die zweite radiale Haltefläche 43 mehr und mehr axial über die Abschlusskante 58 der ersten radialen Haltefläche 42 hinaus. Dies führt dazu, dass die zweite radiale Haltefläche 43 in der vom Ventilschieber 12 wegweisenden axialen Richtung über die erste radiale Haltefläche 42 vorsteht.

Der maßgebliche Effekt hiervon ist, dass sich zwischen der ersten radialen Haltefläche 42 und dem über die erste radiale Haltefläche 42 vorstehenden Längsabschnitt der zweiten radiale Haltefläche 43 eine schräg nach radial außen und zugleich axial zum Ventilschieber 12 orientierte Magnetkraft 64 einstellt, die eine entgegengesetzt zu den ersten axialen Magnetkräften 35 wirkende axiale Kraftkomponente beinhaltet, die im Folgenden als zweite axiale Magnetkraft 36 bezeichnet sei. Die radialen Magnetkräfte 62, die sich zwischen den sich überlappenden Abschnitten der beiden radialen Halteflächen 42, 43 ausbilden, sind irrelevant.

Ersichtlich hängt die Stärke der zweiten axialen Magnetkräfte 36 von der axialen Relativposition zwischen den beiden radialen Halteflächen 42, 43 ab, und insbesondere auch davon, wie weit die zweite radiale Haltefläche 43 über die gehäusefeste erste radiale Haltefläche 42 in Richtung zur ersten axialen Haltefläche 32 axial vorsteht.

Bei der Konzeption der Ventileinrichtung 1 kann man die Toleranzen so aufeinander abstimmen, dass beispielsweise die beiden in Figuren 7 und 8 gezeigten Zustände die maximal mögliche und die minimal mögliche Breite des axialen Zwischenraumes 34 definieren. Dies sind also die Toleranzgrenzen. In diesem Bereich bleiben die auf den Ventilschieber 12 in axialer Richtung einwirkenden magnetischen Haltekräfte relativ konstant, weil sich mit zunehmender Verringerung des zwischen den beiden Halteflächen 32, 33 vorhandenen Abstandes die den dann größer werdenden ersten axialen Magnetkräften 35 entgegenwirkenden zweiten axialen Magnetkräfte 36 ebenfalls zunehmen.

Der geschilderte Effekt lässt sich nicht nur mit ringförmig in sich geschlossenen radialen Halteflächen 42, 43 verwirklichen. Die radialen Halteflächen 42, 43 könnten auch in einzelne um die Längsachse 13 herum verteilte Flächenabschnitte unterteilt sein. Eine symmetrische Verteilung wird hierbei angestrebt, damit sich die radialen Magnetkräfte 62 ausgleichen und keine unerwünschten Querkräfte auf den Ventilschieber 12 ausüben.

Bei der Gestaltung des Jochkörpers 46 ist es von Vorteil, wenn er am rückwärtigen Endabschnitt des in ihm aufgenommenen Permanentmagneten 31 anliegt. Diese Anlage bezieht sich sowohl auf die Bodenwand 48 des Jochkörpers 46, als auch auf den rückwärtigen Endabschnitt 65 der peripheren Umfangsfläche des Permanentmagneten 31. Hingegen ist die Seitenwand 53 im Bereich des vorderen Endabschnittes des Permanentmagneten 31 so geformt, dass sie mit radialem Abstand an der äußeren Umfangsfläche des Permanentmagneten 31 vorbeigreift, und zwar über die Bezugsebene 54 hinaus. Im Bereich der Bezugsebene 54 ist die Seitenwand 53 unter Bildung des Tragvorsprunges 55 nach radial innen abgebogen oder abgewinkelt und endet mit der ersten radialen Haltefläche 42.

Somit ergibt sich ein radialer Luftspalt zwischen dem vorderen Bereich des Permanentmagneten 31 und der Seitenwand 53 des Jochkörpers 46. Da der Außendurchmesser des Jochkörpers 46 jedoch über die gesamte axiale Länge hinweg zumindest im wesentliche konstant ist, hat dies auch zur Folge, dass die Wandstärke der Seitenwand 53 im vorderen Bereich geringer ist als im hinteren Bereich. Dies bewirkt eine Bündelung des Magnetfeldes in Richtung zu der ersten radialen Haltefläche 42, was den gewünschten Effekt besonders begünstigt.

## Patentansprüche

1. Ventileinrichtung, mit einem in einer Aufnahmekammer (7) eines Ventilgehäuses (4) axial bewegbar angeordneten Ventilschieber (12), der durch Fluidbeaufschlagung zwischen zwei durch Anschlagmittel (17) vorgegebenen Endstellungen umschaltbar ist und in mindestens einer dieser Endstellungen durch eine Halteeinrichtung (28) mittels von mindestens einem Permanentmagnet (31) erzeugten Magnetkräften lösbar festgehalten wird, wobei die Halteeinrichtung (28) einander axial zugewandte erste und zweite axiale Halteflächen (32, 33) aufweist, von denen die erste axiale Haltefläche (32) an einem Endabschnitt der Aufnahmekammer (7) ortsfest am Ventilgehäuse (4) und die gegenüberliegende zweite axiale Haltefläche (33) am Ventilschieber (12) angeordnet ist, so dass sich zwischen den beiden axialen Halteflächen (32, 33) erste axiale Magnetkräfte (35) ausbilden können, die den Ventilschieber (12) in der Endstellung festhalten, **dadurch gekennzeichnet, dass** die Halteeinrichtung (28), zusätzlich zu der ersten und zweiten axialen Haltefläche (32, 33), sich in der Endstellung des Ventilschiebers (12) radial bezüglich der Längsachse (13) der Aufnahmekammer (7) gegenüberliegende erste und zweite radiale Halteflächen (42, 43) aufweist, von denen die erste radiale Haltefläche (42) ortsfest am Ventilgehäuse (4) und die zweite radiale Haltefläche (43) am Ventilschieber (12) angeordnet ist, derart, dass sich zwischen den beiden radialen Halteflächen (42, 43) den ersten axialen Magnetkräften (35) entgegengesetzte zweite axiale Magnetkräfte (36) ausbilden, wenn die zweite radiale Haltefläche (43) axial über die erste radiale Haltefläche (42) vorsteht.

2. Ventileinrichtung nach Anspruch 1, **dadurch gekennzeichnet, dass** zur lösbaren Fixierung beider Endstellungen des Ventilschiebers (12) zwei jeweils einem der beiden Endbereiche der Aufnahmekammer (7) zugeordnete Halteeinrichtungen (28) vorhanden sind.

3. Ventileinrichtung nach Anspruch 1 oder 2, **dadurch gekennzeichnet, dass** die die Endstellung vorgebenden Anschlagmittel (17) außerhalb des zwischen der ersten und zweiten axialen Haltefläche (32, 33) definierten axialen Zwischenraumes (34) angeordnet sind.

4. Ventileinrichtung nach Anspruch 3, **dadurch gekennzeichnet, dass** die Anschlagmittel (17) von mindestens einem ortsfest am Ventilgehäuse (4) angeordneten, axial orientierten Ventilsitz (15) und einem mit diesem Ventilsitz (15) koorperierenden, am Ventilschieber (12) angeordneten Verschlusskörper (16) gebildet sind.

5. Ventileinrichtung nach einem der Ansprüche 1 bis 4, **dadurch gekennzeichnet, dass** die beiden axialen Halteflächen (32, 33) in der Endstellung des Ventilschiebers (12) toleranzabhängig unterschiedlich weit axial zueinander beabstandet sein können, wobei die zweite radiale Haltefläche (43) in Abhängigkeit von diesem axialen Abstand unterschiedlich weit über die erste radiale Haltefläche (42) hinausragt.

6. Ventileinrichtung nach einem der Ansprüche 1 bis 5, **dadurch gekennzeichnet, dass** die Anschlagmittel (17) so ausgebildet sind, dass in der Endstellung des Ventilschiebers (12) ein axialer Luftspalt zwischen den beiden axialen Halteflächen (32, 33) vorliegt.

7. Ventileinrichtung nach einem der Ansprüche 1 bis 6, **dadurch gekennzeichnet, dass** die erste radiale Haltefläche (42) nach radial innen und die zweite radiale Haltefläche (43) nach außen weist.

8. Ventileinrichtung nach einem der Ansprüche 1 bis 7, **dadurch gekennzeichnet, dass** die radialen Halteflächen (42, 43) ringförmig ausgebildet sind und sich in der Endstellung des Ventilschiebers (12) mit radialem Abstand koaxial umschließen.

9. Ventileinrichtung nach einem der Ansprüche 1 bis 8, **dadurch gekennzeichnet, dass** die dem Ventilschieber (12) axial abgewandte rückseitige Abschlusskante (58) der ersten radialen Haltefläche (42) einer die erste axiale Haltefläche (32) enthaltenden Ebene (54) zum Ventilschieber (12) hin mit Abstand vorgelagert ist.

10. Ventileinrichtung nach einem der Ansprüche 1 bis 9, dasdurch **gekennzeichnet**, dass die erste radiale Haltefläche (42) mit größerem Radialabstand zur Längsachse (13) der Aufnahmekammer (7) angeordnet ist als die radial außen liegende Abschlusskannte (57) der ersten axialen Haltefläche (32).

11. Ventileinrichtung nach einem der Ansprüche 1 bis 10, **dadurch gekennzeichnet, dass** die zweite axiale Haltefläche (33) an einem stirnseitig am Ventilschieber (12) angeordneten Haltekörper (37) ausgebildet ist, der aus einem ferromagnetischen oder permanentmagnetischen Material besteht.

12. Ventileinrichtung nach Anspruch 11, **dadurch gekennzeichnet, dass** der Haltekörper (37) von einem Befestigungselement (38) gebildet ist, das mit einem Grundkörper (44) des Ventilschiebers (12) verschraubt ist, um einen zur Fluidbeaufschlagung dienenden Antriebskolben (45) zu fixieren.

13. Ventileinrichtung nach Anspruch 11 oder 12, **dadurch gekennzeichnet, dass** die zweite radiale Haltefläche (43) am Außenumfang des Haltekörpers (37) angeordnet ist.

14. Ventileinrichtung nach einem der Ansprüche 1 bis 13, **dadurch gekennzeichnet, dass** die erste radiale Haltefläche (42) an einem Tragvorsprung (55) ausgebildet ist, der radial außerhalb der ersten axialen Haltefläche (32) in Richtung zum Ventilschieber (12) vor eine die erste axiale Haltefläche (32) enthaltende, zur Längsachse (13) der Aufnahmekammer (7) rechtwinklige Ebene (54) ragt.

15. Ventileinrichtung nach Anspruch 14, **dadurch gekennzeichnet, dass** der Tragvorsprung (55) im Querschnitt gesehen zur ersten radialen Haltefläche (42) hin nach radial innen abgebogen oder abgewinkelt ist.

16. Ventileinrichtung nach Anspruch 14 oder 15, **dadurch gekennzeichnet, dass** der Tragvorsprung (55) ringförmig ausgebildet und koaxial zur Längsachse (13) der Aufnahmekammer (7) angeordnet ist.

17. Ventileinrichtung nach einem der Ansprüche 14 bis 16, **dadurch gekennzeichnet, dass** der Tragvorsprung (55) Bestandteil eines ferromagnetischen Jochkörpers (46) ist, der einen die erste axiale Haltefläche (32) aufweisenden Permanentmagnet (31) umschließt.

18. Ventileinrichtung nach Anspruch 17, da**dadurch gekennzeichnet, dass** der Jochkörper (46) topfförmig ausgebildet ist und den Permanentmagnet (31) aufnimmt.

19. Ventileinrichtung nach Anspruch 17 oder 18, **dadurch gekennzeichnet, dass** der Jochkörper (46) an dem dem Ventilschieber (12) entgegengesetzten rückwärtigen Endabschnitt des Permanentmagneten (31) anliegt, während er am vorderen Endabschnitt des Permanentmagneten (31) mit radialem Abstand vorbeigreift und anschließend nach radial innen abgebogen oder abgewinkelt ist.

20. Ventileinrichtung nach einem der Ansprüche 1 bis 19, **dadurch gekennzeichnet, dass** sie als Impulsventil ausgebildet ist.

## Claims

1. Valve unit with a valve spool (12) mounted in a mounting chamber (7) of a valve casing (4) so as to be axially movable, and switchable by means of fluidic pressurisation between two end positions preset by stop means (17) and held releasably in at least one of these end positions by a holding device (28) by means of magnetic forces generated by at least one permanent magnet (31), wherein the holding device (28) has first and second axial holding surfaces (32, 33) axially facing one another, of which the first axial holding surface (32) is mounted immovably on the valve casing (4) on an end section of the mounting chamber (7), and the opposite second axial holding surface (33) is mounted on the valve spool (12), so that first axial magnetic forces (35) are able to develop between the two axial holding surfaces (32, 33) which hold the valve spool (12) in the end position, **characterised in that** the holding device (28) has, in addition to the first and second axial holding surfaces (32, 33), first and second radial holding surfaces (42, 43), which in the end position of the valve spool (12) are facing each other radially with regard to the longitudinal axis (13) of the mounting chamber (7), and of which the first radial holding surface (42) is mounted immovably on the valve casing (4) and the second radial holding surface (43) is mounted on the valve spool (12) in such a way that, between the two radial holding surfaces (42,43), second axial magnetic forces (36) develop opposite to the first axial magnetic forces (35), when the second radial holding surface (43) extends axially beyond the first radial holding surface (42).

2. Valve unit according to claim 1, **characterised in that** two holding devices (28), one assigned to each of the two end sections of the mounting chamber (7), are provided for releasable fixing of the two end positions of the valve spool (12).

3. Valve unit according to claim 1 or 2, **characterised in that** the stop means (17) which preset the end position are located outside the axial gap (34) defined between the first and second axial holding surfaces (32, 33).

4. Valve unit according to claim 3, **characterised in that** the stop means (17) are formed by at least one axially aligned valve seat (15) mounted immovably on the valve casing (4), and a sealing element (16) mounted on the valve spool (12) and cooperating with this valve seat (15).

5. Valve unit according to any of claims 1 to 4, **characterised in that** the two axial holding surfaces (32, 33) may be spaced axially apart with varying clearance in the end position of the valve spool (12), depending on tolerances, wherein the second radial holding surface (43) extends a varying distance beyond the first radial holding surface (42), depending on this axial clearance.

6. Valve unit according to any of claims 1 to 5, **characterised in that** the stop means (17) are so designed that, in the end position of the valve spool (12), there is an axial air gap between the two axial holding surfaces (32, 33).

7. Valve unit according to any of claims 1 to 6, **characterised in that** the first radial holding surface (42) faces radially inwards and the second radial holding surface (43) faces radially outwards.

8. Valve unit according to any of claims 1 to 7, **characterised in that** the radial holding surfaces (42, 43) are annular in form and encompass one another with radial clearance in the end position of the valve spool (12).

9. Valve unit according to any of claims 1 to 8, **characterised in that** the rear terminating edge (58) of the first radial holding surface (42) facing axially away from the valve spool (12) is positioned towards the valve spool (12) with clearance from a plane (54) containing the first axial holding surface (32).

10. Valve unit according to any of claims 1 to 9, **characterised in that** the first radial holding surface (42) is mounted with greater radial clearance from the longitudinal axis (13) of the mounting chamber (7) than the radially outer terminating edge (57) of the first axial holding surface (32).

11. Valve unit according to any of claims 1 to 10, **characterised in that** the second axial holding surface (33) is formed on a holding element (37) located on the end face of the valve spool (12) and made of a ferromagnetic or permanent-magnetic material.

12. Valve unit according to claim 11, **characterised in that** the holding element (37) is formed by a fastening element (38), which is bolted to a base body (44) of the valve spool (12), in order to fix a driving piston (45) used for fluidic pressurisation.

13. Valve unit according to claim 11 or 12, **characterised in that** the second radial holding surface (43) is located on the outer periphery of the holding element (37).

14. Valve unit according to any of claims 1 to 13, **characterised in that** the first radial holding surface (42) is formed on a bearing projection (55) which extends radially outside the first axial holding surface (32) towards the valve spool (12), beyond a plane (54) at right-angles to the longitudinal axis (13) of the mounting chamber (7) and containing the first axial holding surface (32).

15. Valve unit according to claim 14, **characterised in that** the bearing projection (55) viewed in cross-section is bent or angled radially inwards towards the first radial holding surface (42).

16. Valve unit according to claim 14 or 15, **characterised in that** the bearing projection (55) is annular in form and is mounted coaxially to the longitudinal axis (13) of the mounting chamber (7).

17. Valve unit according to any of claims 14 to 16, **characterised in that** the bearing projection (55) is part of a ferromagnetic yoke element (46) encompassing a permanent magnet (31) bearing the first axial holding surface (32).

18. Valve unit according to claim 17, **characterised in that** the yoke element (46) is pot-shaped and accommodates the permanent magnet (31).

19. Valve unit according to claim 17 or 18, **characterised in that** the yoke element (46) abuts the rear end section of the permanent magnet (31) opposite the valve spool (12), while reaching past the leading end section of the permanent magnet (31) with radial clearance, after which it is bent or angled radially inwards.

20. Valve unit according to any of claims 1 to 19, **characterised in that** it is in the form of a pulse valve.

## Revendications

1. Dispositif à soupape avec un tiroir de soupape (12) disposé de manière axialement mobile dans une chambre de réception (7) d'une cage de soupape (4), qui peut être commuté par sollicitation fluidique entre deux positions finales prescrites par des moyens de butée (17) et est maintenu de manière détachable dans au moins l'une de ces positions finales par un dispositif de retenue (28) à l'aide de forces magnétiques générées par au moins un aimant permanent (31), le dispositif de retenue (28) présentant des premières et secondes surfaces de retenue (32, 33) axiales, tournées axialement l'une vers l'autre, dont la première surface de retenue axiale (32) est fixement disposée sur une section d'extrémité de la chambre de réception (7) sur la cage de soupape (4) et la seconde surface de retenue axiale opposée (33) sur le tiroir de soupape (12) de sorte qu'entre les deux surfaces de retenue (32, 33) axiales puissent se réaliser des premières forces magnétiques (35) axiales qui maintiennent le tiroir de soupape (12) dans la position finale, **caractérisé en ce que** le dispositif de retenue (28) présente outre les premières et les secondes surfaces de retenue axiales (32, 33), des premières et secondes surfaces de retenue (42, 43) radiales opposées dans la position finale du tiroir de soupape (12) radialement par rapport à l'axe longitudinal (13) de la chambre de réception (7), dont la première surface de retenue radiale (42) est fixement disposée sur la cage de soupape (4) et la seconde surface de retenue (43) radiale sur le tiroir de soupape (12) de telle sorte qu'entre les deux surfaces de retenue radiales (42, 43) se réalisent des secondes forces magnétiques axiales (36) opposées aux premières forces magnétiques (35) axiales lorsque la seconde surface de retenue radiale (43) dépasse axialement de la première surface de retenue (42) radiale.

2. Dispositif à soupape selon la revendication 1, **caractérisé en ce que** deux dispositifs de retenue (28) associés respectivement à l'une des deux zones d'extrémité de la chambre de réception (7) sont présents pour la fixation détachable des deux positions finales du tiroir de soupape (12).

3. Dispositif à soupape selon la revendication 1 ou 2, **caractérisé en ce que** les moyens de butée (17) prescrivant la position finale sont disposés en dehors de l'espace intermédiaire (34) axial défini entre la première et la seconde surface de retenue (32, 33) axiale.

4. Dispositif à soupape selon la revendication 3, **caractérisé en ce que** les moyens de butée (17) sont formés par au moins un siège de soupape (15) orienté axialement, disposé fixement sur la cage de soupape (4) et un corps de fermeture (16) disposé sur le tiroir de soupape (12), coopérant avec ce siège de soupape (15).

5. Dispositif à soupape selon l'une quelconque des revendications 1 à 4, **caractérisé en ce que** les deux surfaces de retenue (32, 33) axiales peuvent être espacées en fonction des tolérances de manière différente axialement l'une par rapport à l'autre dans la position finale du tiroir de soupape (12), la seconde surface de retenue (43) radiale s'élevant en fonction de cette distance axiale de manière différente au-delà de la première surface de retenue radiale (42).

6. Dispositif à soupape selon l'une quelconque des revendications 1 à 5, **caractérisé en ce que** les moyens de butée (17) sont réalisés de sorte que dans la position finale du tiroir de soupape (12) se trouve un entrefer axial entre les deux surfaces de retenue axiales (32, 33).

7. Dispositif à soupape selon l'une quelconque des revendications 1 à 6, **caractérisé en ce que** la première surface de retenue radiale (42) est tournée radialement vers l'intérieur et la seconde surface de retenue radiale (43) vers l'extérieur.

8. Dispositif à soupape selon l'une quelconque des revendications 1 à 7, **caractérisé en ce que** les surfaces de retenue radiales (42, 43) sont réalisées en forme d'anneau et s'entourent coaxialement dans la position finale du tiroir de soupape (12) à distance radiale.

9. Dispositif à soupape selon l'une quelconque des revendications 1 à 8, **caractérisé en ce que** l'arête de fermeture (58) côté arrière éloignée axialement du tiroir de soupape (12) de la première surface de retenue (42) radiale est montée à distance en amont d'un plan (54) contenant la première surface de retenue axiale (32) vers le tiroir de soupape (12).

10. Dispositif à soupape selon l'une quelconque des revendications 1 à 9, **caractérisé en ce que** la première surface de retenue radiale (42) est disposée à une distance radiale plus grande par rapport à l'axe longitudinal (13) de la chambre de réception (7) que l'arête de fermeture (57) se trouvant radialement à l'extérieur de la première surface de retenue axiale (32).

11. Dispositif à soupape selon l'une quelconque des revendications 1 à 10, **caractérisé en ce que** la seconde surface de retenue axiale (33) est réalisée sur un corps de retenue (37) disposé côté avant sur le tiroir de soupape (12), qui se compose d'un matériau ferromagnétique ou magnétique permanent.

12. Dispositif à soupape selon la revendication 11, **caractérisé en ce que** le corps de retenue (37) est formé par un élément de fixation (38) qui est vissé à un corps de base (44) du tiroir de soupape (12) afin de fixer un piston d'entraînement (45) servant à la sollicitation fluidique.

13. Dispositif à soupape selon la revendication 11 ou 12, **caractérisé en ce que** la seconde surface de retenue (43) radiale est disposée sur la périphérie extérieure du corps de retenue (37).

14. Dispositif à soupape selon l'une quelconque des revendications 1 à 13, **caractérisé en ce que** la première surface de retenue radiale (42) est réalisée sur une saillie porteuse (55) qui s'élève radialement en dehors de la première surface de retenue axiale (32) en direction du tiroir de soupape (12) avant un plan (54) à angles droits par rapport à l'axe longitudinal (13) de la chambre de réception (7), contenant la première surface de retenue axiale (32).

15. Dispositif à soupape selon la revendication 14, **caractérisé en ce que** la saillie porteuse (55) est courbée ou coudée radialement vers l'intérieur, vu en section, vers la première surface de retenue (42) radiale.

16. Dispositif à soupape selon la revendication 14 ou 15, **caractérisé en ce que** la saillie porteuse (55) est réalisée en forme d'anneau et est disposée coaxialement à l'axe longitudinal (13) de la chambre de réception (7).

17. Dispositif à soupape selon l'une quelconque des revendications 14 à 16, **caractérisé en ce que** la saillie porteuse (55) est un constituant d'un corps de culasse (46) ferromagnétique qui entoure un aimant permanent (31) présentant la première surface de retenue axiale (32).

18. Dispositif à soupape selon la revendication 17, **caractérisé en ce que** le corps de culasse (46) est réalisé en forme de pot et reçoit l'aimant permanent (31).

19. Dispositif à soupape selon la revendication 17 ou 18, **caractérisé en ce que** le corps de culasse (46) repose sur la section finale de l'aimant permanent (31) arrière, opposée au tiroir de soupape (12), alors qu'il saisit en passant la section finale avant de l'aimant permanent (31) à distance radiale et est ensuite courbé ou coudé radialement vers l'intérieur.

20. Dispositif à soupape selon l'une quelconque des revendications 1 à 19, **caractérisé en ce qu'**il est réalisé comme une soupape à impulsions.
